# EUROPÄISCHE PATENTANMELDUNG

(11) **EP 1 130 856 A2**
(43) Veröffentlichungstag der Anmeldung: **05.09.2001**
(21) Anmeldenummer: 00118092.6
(22) Anmeldetag: 23.08.2000
(51) Int. Cl.: H04L 12/56

(54) **Verfahren zur Übertragung von Daten und Vermittlungseinrichtung**

(30) Priorität: 10.12.1999 DE 19959705
(71) Anmelder: Tenovis GmbH & Co. KG, 60362 Frankfurt am Main (DE)
(72) Erfinder: Schmidt, Werner, 63762 Grossostheim (DE)
(74) Vertreter: Bohnenberger, Johannes, Dr.

(57) **Zusammenfassung**

Es wird ein Verfahren zum Übertragen von Daten bzw. eine Vermittlungseinrichtung vorgeschlagen, die dazu dienen, isochrone Daten von einer Leitung (1, 15) zu einer anderen Leitung (1, 15) weiter zu übertragen, wobei auch asynchrone Daten übertragen werden. Die erfindungsgemäße Vermittlungseinrichtung weist einen Bus (4), Buscontroller (3, 13), Datencontroller (2, 14) und einen Rechner (5) auf. Die Datencontroller (2, 14) schreiben die ankommenden isochronen Daten in Datenblöcke, die von den Buscontrollern (3, 13) über den Bus 4 übertragen werden. Der Rechner (5) legt fest, an welcher Stelle eines Datenblocks ein Datencontroller seine isochronen Daten schreibt. Damit wird erreicht, daß die Datenblöcke, die von den Buscontrollern gleichzeitig auf den Bus gelegt werden, sich so überlagern, daß Daten nicht gegenseitig überschrieben werden. Isochrone Daten, die für eine vorgegebene Zeit nicht über den Bus übertragen werden konnten, werden gelöscht. Die Datenblöcke werden ferner durchnumeriert, so daß ein Datencontroller empfangene Datenblöcke sortiert und evtl. fehlende Datenblöcke durch vorgegebene Leerinformationen ersetzt.

## Beschreibung

### Stand der Technik

Die Erfindung geht aus von einem Verfahren zum Übertragen von Daten bzw. einer Vermittlungseinrichtung nach der Gattung der unabhängigen Patentansprüche.

Es ist bereits aus der Patentschrift US-5 802 059 bekannt, daß isochrone Daten neben asynchronen Daten über einen Bus in einer Vermittlungseinrichtung von einer an den Bus angeschlossenen Station zu einer weiteren, an den Bus angeschlossenen Station übertragen werden.

### Vorteile der Erfindung

Das erfindungsgemäße Verfahren zum Übertragen von Daten bzw. die erfindungsgemäße Vermittlungseinrichtung mit den Merkmalen der unabhängigen Patentansprüche haben demgegenüber den Vorteil, daß mehrere Datencontroller von einem Rechner in der erfindungsgemäßen Vermittlungseinrichtung gesteuert werden und daß die Datencontroller aufgrund der Informationen des Rechners signalisiert bekommen, an welchen Positionen eines Datenblocks die isochronen Daten zu schreiben bzw. zu lesen sind, damit werden sich gleichzeitig auf den Bus geschaltete Datenblöcke konstruktiv überlagern. Es werden also keine Daten überschrieben, wenn sich Datenblöcke überlagern. Damit wird die Übertragungseffizienz des Verfahrens gesteigert.

Insbesondere für die hybride Übertragung von isochronen Daten und anderen paketorientierten Informationen mit fester Paketlänge wird die vorhandene Übertragungskapazität des Busses effizienter genutzt.

Weiterhin werden vorteilhafterweise die isochronen Informationen ohne Umformatierung in der erfindungsgemäßen Vermittlungseinrichtung vermittelt, wodurch erheblich an Aufwand und an Zeit eingespart wird. Die isochronen Daten und die asynchronen Daten werden dabei an ihrer Priorität unterschieden, was ebenfalls eine Aufwandsersparnis bedeutet.

Müssen die isochronen Daten in das ATM (Asynchronous Transfer Mode)-Format umformatiert werden, um in ATM-Zellen übertragen zu werden, geschieht das nun an einer zentralen Stelle in der Vermittlungseinrichtung, wodurch ebenfalls eine Effizienzsteigerung erzielt wird.

Durch die in den abhängigen Ansprüchen aufgeführten Maßnahmen sind vorteilhafte Weiterbildungen und Verbesserungen des im unabhängigen Patentanspruch angegebenen Verfahrens bzw. der im unabhängigen Patentanspruch angegebenen Vermittlungseinrichtung möglich.

Besonders vorteilhaft ist, daß mehrere Datencontroller Daten in Datenblöcke schreiben, die gleichzeitig von den Buscontrollern auf den Bus gegeben werden. Damit wird Übertragungsbandbreite vorteilhafterweise eingespart.

Darüber hinaus ist es von Vorteil, daß ein Zeitversatz für die Datenblöcke eingestellt wird, um Laufzeitunterschiede durch die aktuelle Busauslastung auszugleichen. Dadurch wird die Busauslastung optimiert.

In einer Weiterbildung der Erfindung werden Datenblöcke, die nicht gesendet werden können, gepuffert und, wenn sie bis zu einer vorgegebenen Zeitdauer nicht gesendet werden können, verworfen. Damit wird erreicht, daß isochrone Datenblöcke mit einer sehr großen Verzögerungszeit nicht mehr zur Übertragung verwendet werden. Dies ist im Hinblick darauf wichtig, daß isochrone Daten, wie z.B. Sprachdaten, sehr anfällig gegenüber Zeitverzögerungen sind. Daher ist es besser, auf diese Daten zu verzichten, als sie weiterhin zu übertragen.

Weiterhin ist es von Vorteil, daß die einzelnen Datenblöcke eine Nummer erhalten, so daß ein empfangender Buscontroller für fehlende Datenblöcke, die er anhand der Numerierung identifiziert, eine Leerinformation einträgt. Damit werden vorteilhafterweise Verluste, die durch nicht versendete Datenblöcke auftreten, gekennzeichnet.

Darüber hinaus ist von Vorteil, daß ein Rechner mehrere Datencontroller steuert, so daß dieser Rechner angibt, wann und an welche Stellen ein Datencontroller Daten in einen Datenblock schreibt. Dies führt zu einer effizienten Auslastung des Busses, da kein Platz in einem Datenblock verschenkt wird.

### Zeichnung

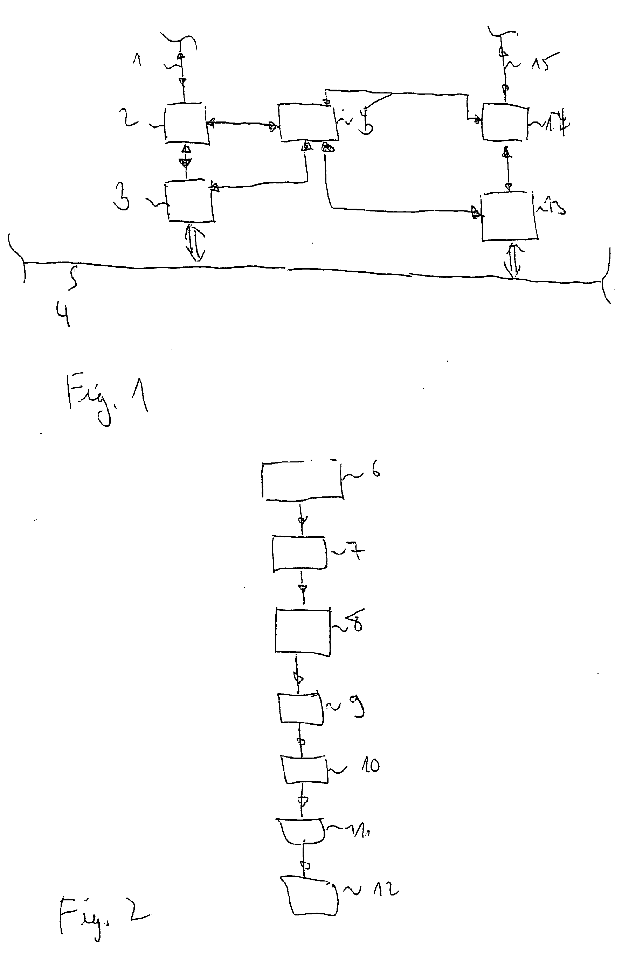

Ausführungsbeispiele der Erfindung sind in der Zeichnung dargestellt und in der nachfolgenden Beschreibung näher erläutert. Es zeigen Figur 1 ein Blockschaltbild der erfindungsgemäßen Vermittlungseinrichtung und Figur 2 ein Flußdiagramm des erfindungsgemäßen Verfahrens zur Übertragung von Daten.

### Beschreibung

An einer Vermittlungseinrichtung sind im allgemeinen mehrere Datenleitungen angeschlossen. Über solche Datenleitungen werden auch isochrone Daten übertragen. Isochrone Daten hängen von einem einheitlichen Takt ab, oder sie weisen eine eigene Taktinformation selbst auf. Daneben sind auch Datenleitungen an die Vermittlungseinrichtung angeschlossen, die ATM-Zellen übertragen.

Isochrone Daten, die auf einer Leitung zu der Vermittlungseinrichtung gelangen, sollen wenigstens auf eine andere Leitung weitervermittelt werden. Daher weist die Vermittlungseinrichtung einen breitbandigen Bus auf, an den mehrere Leitungen mittels Daten- und Buscontrollern angeschlossen sind. Da isochrone Daten, zu denen z.B. Sprach- oder Videodaten gehören, anfällig für Zeitverzögerungen sind, ist bei der Vermittlung darauf besonders Rücksicht zu nehmen. Neben isochronen Daten werden auf dem Bus auch paketorientierte Daten mit fester Paketlänge, insbesondere ATM-Zellen, über den Bus übertragen. Eine ATM-Zelle als Datenpaket hat eine Länge von 53 Bytes. In der Beschreibung wird im folgenden der Begriff Datenpaket verwendet, der ein Synonym für den Begriff Zelle ist

Es stellt sich daher die Aufgabe, in einer Vermittlungseinrichtung isochrone Daten von einer Leitung zu einer anderen zu vermitteln, wobei eine Verlustrate von isochronen Daten zu minimieren und die Übertragungseffizienz auf dem Bus der Vermittlungseinrichtung zu optimieren sind.

Im normalen Betrieb sollte die Verlustrate dabei gleich Null sein.

Erfindungsgemäß werden die zur Vermittlungseinrichtung über eine Datenleitung übertragenen isochronen Daten von einem Datencontroller in der Vermittlungseinrichtung empfangen, wobei der Datencontroller selbst mit einem Buscontroller verbunden ist. Die Daten werden in Datenblöcken fester Länge, deren Größe der Paketlänge entspricht, von dem Datencontroller zu dem Buscontroller übertragen, der dann die Übertragung der Datenblöcke auf dem Bus ausführt. Dabei werden tatsächlich die Datenblöcke mehrerer Datencontroller gleichzeitig auf dem Bus übertragen, es kommt zu einer Überlagerung. Ein Rechner steuert die Datencontroller, so daß der Rechner den Datencontrollern Felder in den Datenblöcken zuweist, auf welche die Datencontroller dann schreiben, so daß letztlich auf dem Bus ein gemeinsamer Datenblock durch Überlagerung übertragen wird, da ein Feld, das in einem Datenblock beschrieben wird, zu der gleichen Zeit in keinem anderen Datenblock beschrieben wird.

Der Begriff Station bezeichnet im folgenden einen Datencontroller und einen dazugehörigen Buscontroller.

In Figur 1 ist ein Blockschaltbild der erfindungsgemäßen Vermittlungseinrichtung dargestellt. Eine Datenleitung 1, die isochrone Daten überträgt, ist an einen Datencontroller 2 über seinen Datenein/-ausgang angeschlossen. Der Datencontroller 2 ist über seinen zweiten Datenein/-ausgang an einen ersten Datenein/-ausgang eines Rechners 5 angeschlossen. Der Datencontroller 2 ist weiterhin über seinen dritten Datenein/-ausgang mit einem Buscontroller mit dessen ersten Datenein/-ausgang verbunden. Über seinen zweiten Dateinein/-ausgang ist der Buscontroller 3 mit einem Bus 4 verbunden.

Eine weitere Datenleitung 15, die ebenfalls isochrone Daten überträgt, ist an einen zweiten Datencontroller 14 über seinen ersten Datenein/-ausgang angeschlossen. Über seinen zweiten Datenein/-ausgang ist der Datencontroller 14 mit einem zweiten Datenein/-ausgang des Rechners 5 verbunden. Der Datencontroller 14 ist über seinen dritten Datenein/ausgang mit einem ersten Datenein/-ausgang eines Buscontrollers 13 verbunden. Weiterhin ist der Buscontroller 13 über seinen zweiten Datenein/-ausgang an den Bus 4 angeschlossen.

Beispielhaft sind hier zwei Datenleitungen mit Datencontrollern und Buscontrollern dargestellt. Es können aber weitere Datenleitungen mit entsprechenden Datencontrollern und Buscontrollern in der Vermittlungseinrichtung vorliegen, wobei insbesondere Datenleitungen angeschlossen sind, die ATM-Zellen übertragen. Die isochronen Daten, die über solche Datenleitungen versendet werden, müssen dann von der Station, die an die ATM-Leitung angeschlossen ist, entsprechend dem ATM-Zellen-Format umformatiert werden.

Alle Datencontroller werden von dem Rechner 5 gesteuert und übergeben dem Rechner 5 Daten, so daß der Rechner 5 den Datentransfer der isochronen Daten über den Bus 4 optimiert.

Auf dem Bus 4 liegt ein fester Rahmentakt für die isochronen Daten vor, zum Beispiel 8 kHz. Innerhalb eines Rahmens gibt es eine feste Anzahl von Datenblöcken, die in gewissen Teilbereichen der Rahmendauer übertragen werden. Der Übertragungszeitpunkt hängt von der Auslastung des Busses 4 ab. Laufzeitschwankungen zwischen den unterschiedlichen Buscontrollern als Sender und Empfänger werden dabei durch Pufferung ausgeglichen.

Datenblöcke mit isochronen Daten werden nur bei Bedarf übertragen, ansonsten werden die Übertragungskapazitäten für andere Datenpaketübertragungen benutzt. Bei einem Verbindungsaufbau für eine Übertragung isochroner Daten wird festgelegt, welche Teilbereiche der Rahmendauer für den Datenblock der neuen Verbindung benutzt werden. Der Datencontroller 2, 14 schreibt dann die isochronen Daten in den dadurch festgelegten Datenblock. Der Buscontroller 3, 13 überträgt den Datenblock in dem dafür vorgesehenen Zeitbereich des Rahmens, wobei hier eine Überlagerung von zeitgleichen Datenblöcken von anderen Buscontrollern 3, 13 durchgeführt wird, ohne daß Daten überschrieben werden. Der Buscontroller 3, 13 als Empfänger nimmt die isochronen Datenblöcke vom Bus 4 und überträgt sie zum Datencontroller 2, 14. Der Datencontroller 2, 14 entnimmt dann die isochronen Daten aus den festgelegten Datenblöcken und schaltet sie auf einen isochronen Anschluß.

In Figur 2 ist das erfindungsgemäße Verfahren zum Übertragen von Daten dargestellt. Dieses Verfahren läuft in der Vermittlungseinrichtung, die in Figur 1 als Blockschaltbild dargestellt ist, ab. Es wird im folgenden ein Beispiel einer Übertragung von isochronen Daten von der Datenleitung 1 zu der Datenleitung 15 dargestellt.

In Verfahrensschritt 6 werden isochrone Daten, die über die Datenleitung 1 übertragen werden, von dem Datencontroller 2 empfangen. Die isochronen Daten werden dann in dem Datencontroller 2 gepuffert.

In Verfahrensschritt 7 überträgt der Datencontroller 2 in Datenblöcken die isochronen Daten zu dem Buscontroller 3. Die Datenblockstruktur wird von dem Rechner 5 vorgegeben, der die Datenblöcke der einzelnen an den Bus 4 angeschlossenen Buscontroller 3, 13 derart gestaltet, daß eine Überlagerung der Datenblöcke nicht zu einem Verlust oder Überschreiben von Daten führt. D.h., die einzelnen Datencontroller schreiben die isochronen Daten in solche Felder eines Datenblocks, die nicht von anderen Datencontrollern in ihren Datenblöcken beschrieben werden, so daß gleichzeitig auf den Bus gebrachte Datenblöcke sich gegenseitig nicht so überlagern, daß Daten sich gegenseitig überschreiben. Es entsteht damit letztlich ein Datenblock.

In Verfahrensschritt 8 puffert der Buscontroller 3 den vom Datencontroller 2 übertragenen Datenblock, bis der Buscontroller 3 eine erfolgreiche Arbitrierung durchführt.

Arbitrierung heißt, daß der Buscontroller 3 an einem Zugriffswettbewerb für den Bus 4 teilnimmt. Für solche Zugriffswettbewerbe weist der Buscontroller 3 je nach zu übertragenden Daten eine Priorität auf. Für die isochronen Datenübertragungen wird die für alle an den Bus 4 angeschlossenen Stationen gleiche, möglichst hohe Priorität verwendet, so dass wenn mindestens eine Station die Arbitrierung durchführt, die Arbitrierung für isochrone Datenübertragungen mit hoher Wahrscheinlichkeit erfolgreich sein wird.

Da nun isochrone Daten sehr anfällig gegenüber Zeitverzögerungen sind, weisen die Buscontroller 3, 13 einen Zähler auf, der die Zeit mißt, wie lange ein Datenblock gepuffert wurde. Wird ein vorgegebener Zeitwert erreicht, wird der Datenblock gelöscht, denn dann ist die Zeitverzögerung so lange, daß eine Übertragung keinen Sinn mehr macht. Die Datenblöcke werden dafür durchnumeriert, so daß ein empfangender Buscontroller 13 die Datenblöcke überprüfen kann, ob ein Datenblock, z.B. aufgrund eines zu langen Speicherns fehlt. Der empfangende Datenblock wird dann diesen fehlenden Datenblock durch eine vorgegebene Leerinformation ersetzen.

In Verfahrensschritt 9 übertragen alle im Zugriffswettbewerb siegreichen Buscontroller, zum Beispiel 3 und 13, gemeinsam ihre zeitgleichen isochronen Daten in Datenblöcken zu allen Buscontrollern, die die Daten entgegennehmen und zu ihren jeweiligen Datencontrollern weitergeben. Können die empfangenen Datenblöcke nicht gleich über die angeschlossenen Datenleitungen, zum Beispiel Datenleitung 15, weiter übertragen, dann puffert der betreffende Datencontroller, zum Beispiel Datencontroller 14, diese Datenblöcke, bis eine Weiterverarbeitung möglich ist.

Da der Bus 4 unterschiedlich mit Datenübertragung belastet ist, ist daher eine Pufferung notwendig. Entsprechend der maximalen Pufferdauer auf der Sende- und Empfansseite wird zwischen den kommenden und gehenden Richtungen der Leitungen, die die isochronen Daten übertragen (z.B. Leitung 1 und 15) ein Versatz des isochronen Rahmens festgelegt. Es wird also auf beiden Seiten des Busses eine bestimmte Anzahl von Datenblöcken gepuffert, d.h. auf der Sendeseite stehen Puffer zur Verfügung, um Verzögerungen der Arbitrierung auf dem Bus 4 auszugleichen. Empfangsseitig werden die Daten erst mit einer Verzögerung vom Datencontroller auf die isochronen Dateneitungen weitergegeben, um bei einer späteren Arbitrierung noch sicherzustellen, daß isochrone Daten verfügbar sind. Es wird demnach ein Pufferleerlauf vermieden.

In Verfahrensschritt 10 empfängt also der Buscontroller 13 die vom Buscontroller 3 gesendeten Datenblöcke und in Verfahrensschritt 11 übergibt der Buscontroller 13 dem Datencontroller 14 die empfangenen Datenblöcke, während in Verfahrensschritt 12 schließlich der Datencontroller 14 die isochronen Daten auf die Datenleitung 15 gibt, so daß sie weiter übertragen werden.

## Patentansprüche

1. Verfahren zum Übertragen von Daten, wobei die Daten als isochrone Daten übertragen werden, wobei die isochronen Daten von einem Datencontroller (2, 14) gepuffert werden, wobei die isochronen Daten neben ATM-Daten über einen Bus (4) übertragen werden, dadurch gekennzeichnet; daß die isochronen Daten blockweise zwischen dem Datencontroller (2, 14) und einem Buscontroller (3, 13) übertragen werden, daß die isochronen Daten von dem Datencontroller (2, 14) in den/von dem Datenblock zur/nach der Übertragung über einen Bus geschrieben/gelesen werden, an welchen Positionen des Datenblocks die isochronen Daten geschrieben/gelesen werden und daß nach erfolgreicher Arbitrierung der Datenblock von dem Buscontroller (3, 13) über den Bus (4) zu mindestens einem anderen Buscontroller (3, 13) übertragen wird.

2. Verfahren nach Anspruch 1, dadurch gekennzeichnet, daß die isochrone Daten von mehreren Datencontrollern (2, 14), die mit unterschiedlichen Buscontrollern (3, 13) verbunden sind, in Datenblöcke geschrieben werden, die gleichzeitig von den Buscontrollern (3, 13) auf den Bus (4) gegeben werden.

3. Verfahren nach Anspruch 2, dadurch gekennzeichnet, daß von einem Buscontroller (3, 13) empfangene Datenblöcke durch den Datencontroller (2, 14) gepuffert werden, falls die empfangenen Datenblöcke nicht unmittelbar verarbeitet werden.

4. Verfahren nach Anspruch 3, dadurch gekennzeichnet, daß ein Zeitversatz der Datenblöcke eingestellt wird, um Laufzeitunterschiede durch eine aktuelle Busauslastung auszugleichen.

5. Verfahren nach Anspruch 4, dadurch gekennzeichnet, daß von einem Buscontroller (3, 13) zu versendende Datenblöcke gepuffert werden, bis die Datenblöcke gesendet werden, oder eine vorgegebene Zeit erreicht wird, und daß dann die Datenblöcke aus dem Puffer gelöscht werden.

6. Verfahren nach Anspruch 5, dadurch gekennzeichnet, daß die Datenblöcke mit Nummern versehen werden und daß, wenn ein Datenblock fehlt, dieser Datenblock durch eine Leerinformation ersetzt wird.

7. Verfahren nach Anspruch 6, dadurch gekennzeichnet, daß eine isochrone Datenübertragung mit der höchsten Priorität versehen wird.

8. Vermittlungseinrichtung, wobei die Vermittlungseinrichtung einen Datencontroller (2, 14) aufweist, der an eine Leitung (1, 15) angeschlossen ist, über die der Datencontroller (2, 14) isochrone Daten empfängt und dann puffert, wobei die Vermittlungseinrichtung einen Buscontroller (3, 13) aufweist, der mit dem Datencontroller (2, 14) verbunden ist, wobei die Vermittlungseinrichtung einen Rechner (5) aufweist, der mit dem Datencontroller und dem Buscontroller verbunden ist, wobei die Vermittlungseinrichtung einen Bus (4) aufweist, über den die isochronen Daten und auch ATM-Daten übertragen werden, dadurch gekennzeichnet, daß der Datencontroller (2, 14) die isochronen Daten blockweise zum Buscontroller (3, 13) überträgt, wobei der Rechner (5) festlegt, an welchen Stellen des Datenblocks der Datencontroller (2, 14) die isochronen Daten schreibt und daß nach erfolgreicher Arbitrierung der Buscontroller (3, 13) den Datenblock über den Bus (4) zu mindestens einem anderen Buscontroller (3, 13) überträgt.

9. Vermittlungseinrichtung nach Anspruch 8, dadurch gekennzeichnet, daß verschiedene Buscontroller (3, 13) ihre Datenblöcke mit isochronen Daten gleichzeitig übertragen.

10. Vermittlungseinrichtung nach Anspruch 9, dadurch gekennzeichnet, daß ein Datencontroller (2, 14) einen Puffer aufweist, um empfangene Datenblöcke zwischenzuspeichern.
